# EUROPEAN PATENT APPLICATION

(11) **EP 4 703 573 A1**
(43) Date of publication of application: **04.03.2026**
(21) Application number: 24796566.8
(22) Date of filing: 04.03.2024
(51) Int. Cl.: F02B 19/12, F02B 19/16, F02B 43/00, F02B 43/04

(54) **GAS ENGINE**

(30) Priority: 27.04.2023 JP 2023073394
(71) Applicant: IHI Corporation, Tokyo 135-8710 (JP); IHI Power Systems Co., Ltd., Chiyoda-ku Tokyo 101-0021 (JP)
(72) Inventor: MIYAUCHI, Kenta, Tokyo 135-8710 (JP)
(74) Representative: TBK
(86) International application number: PCT/JP2024/008028
(87) International publication number: WO 2024/224808

(57) **Abstract**

Provided is a gas engine, including: a combustion chamber (108); a first sub-chamber (202) that is in communication with the combustion chamber (108) via a first communication hole (202b); a second sub-chamber (204) that is in communication with the first sub-chamber (202) via a second communication hole (204b), and has a volume smaller than a volume of the first sub-chamber (202); an ignition device (206) provided in the second sub-chamber (204); and an injection hole (208) through which a gas is allowed to be injected into the second sub-chamber (204).

## Description

### Technical Field

The present disclosure relates to a gas engine. This application claims the benefit of priority to Japanese Patent Application No. 2023-073394 filed on April 27, 2023, and contents thereof are incorporated herein.

### Background Art

In gas engines, fuels having flame retardancy are used in some cases. For example, as disclosed in Patent Literature 1, there has been proposed a technology of using flame-retardant ammonia as a fuel. The use of ammonia as a fuel suppresses emission of carbon dioxide.

### Citation List

### Patent Literature

Patent Literature 1: JP 2020-148198 A

### Summary

### Technical Problem

In a case in which a fuel having flame retardancy is used, when combustion in a combustion chamber is not sufficiently promoted, there is a fear in that an in-cylinder pressure becomes low. Accordingly, it is desired to promote the combustion in the combustion chamber.

The present disclosure has an object to provide a gas engine capable of promoting combustion in a combustion chamber.

### Solution to Problem

In order to solve the above-mentioned problem, according to the present disclosure, there is provided a gas engine, including: a combustion chamber; a first sub-chamber that is in communication with the combustion chamber via a first communication hole; a second sub-chamber that is in communication with the first sub-chamber via a second communication hole and has a volume smaller than a volume of the first sub-chamber; an ignition device provided in the second sub-chamber; and an injection hole through which a gas is allowed to be injected into the second sub-chamber.

The injection hole may be formed in the first sub-chamber, and may face the second communication hole.

A direction of a center axis of the injection hole may intersect a direction of a center axis of the second communication hole.

The injection hole may be formed in the second sub-chamber.

The injection hole may be connected to a supply source for the gas through intermediation of a supply channel, and a check valve may be provided in the supply channel so as to restrict a flow of the gas to a direction from the supply source toward the injection hole.

### Advantageous Effects of Invention

According to the present disclosure, combustion in the combustion chamber can be promoted.

### Brief Description of Drawings

FIG. 1 is a view for illustrating a schematic configuration of a gas engine according to an embodiment of the present disclosure.
FIG. 2 is a view for illustrating a schematic configuration of an ignition mechanism in the embodiment of the present disclosure.
FIG. 3 is an extracted view for illustrating a part indicated by the dot-and-dash line of FIG. 2.
FIG. 4 is a view of a second sub-chamber housing as seen from below.
FIG. 5 is a view of the second sub-chamber housing as seen from the lateral side.
FIG. 6 is a view for illustrating an example that is different from the example illustrated in FIG. 3 to FIG. 5 in a positional relationship between an injection hole and a second communication hole.
FIG. 7 is a view for illustrating an example that is different from the example illustrated in FIG. 3 to FIG. 5 in the positional relationship between the injection hole and the second communication hole.
FIG. 8 is a view for illustrating an example that is different from the example illustrated in FIG. 3 to FIG. 5 in the positional relationship between the injection hole and the second communication hole.
FIG. 9 is a view for illustrating an example in which a check valve is added to the example illustrated in FIG. 3 to FIG. 5.
FIG. 10 is a view for illustrating an example that is different from the example illustrated in FIG. 3 to FIG. 5 in a shape of the injection hole.
FIG. 11 is a view for illustrating an example that is different from the example illustrated in FIG. 3 to FIG. 5 in a shape of the injection hole.
FIG. 12 is a view for illustrating a schematic configuration of an ignition mechanism in a modification example.
FIG. 13 is an extracted view for illustrating a part indicated by the dot-and-dash line of FIG. 12.

### Description of Embodiments

Now, with reference to the attached drawings, embodiments of the present disclosure are described. The dimensions, materials, and other specific numerical values represented in the embodiments are merely examples used for facilitating the understanding of the disclosure, and do not limit the present disclosure unless otherwise particularly noted. Elements having substantially the same functions and configurations herein and in the drawings are denoted by the same reference symbols to omit redundant description thereof. Further, illustration of elements with no direct relationship to the present disclosure is omitted.

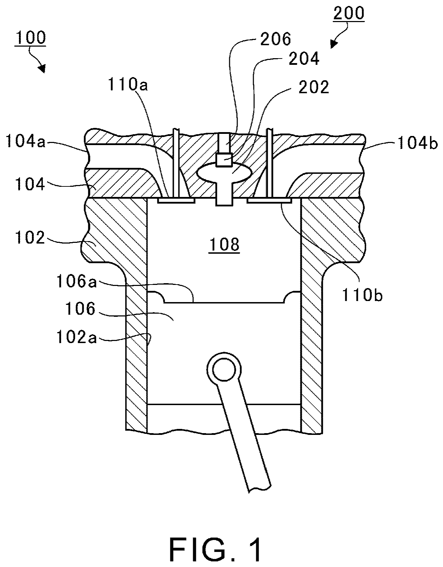

FIG. 1 is a view for illustrating a schematic configuration of a gas engine 100. As illustrated in FIG. 1, the gas engine 100 includes a cylinder block 102, a cylinder head 104, and a piston 106.

A cylinder 102a is formed in the cylinder block 102. An inner peripheral surface of the cylinder 102a may be formed by a cylinder liner that is press-fitted or cast into the cylinder block 102. The piston 106 is accommodated in the cylinder 102a. A combustion chamber 108 is formed inside the cylinder 102a. The combustion chamber 108 is defined by the cylinder 102a of the cylinder block 102, the cylinder head 104, and a crown surface 106a of the piston 106.

An intake port 104a and an exhaust port 104b are formed in the cylinder head 104. The intake port 104a and the exhaust port 104b are opened to the combustion chamber 108. An opening of the intake port 104a on the combustion chamber 108 side is opened and closed by an intake valve 110a. An opening of the exhaust port 104b on the combustion chamber 108 side is opened and closed by an exhaust valve 110b.

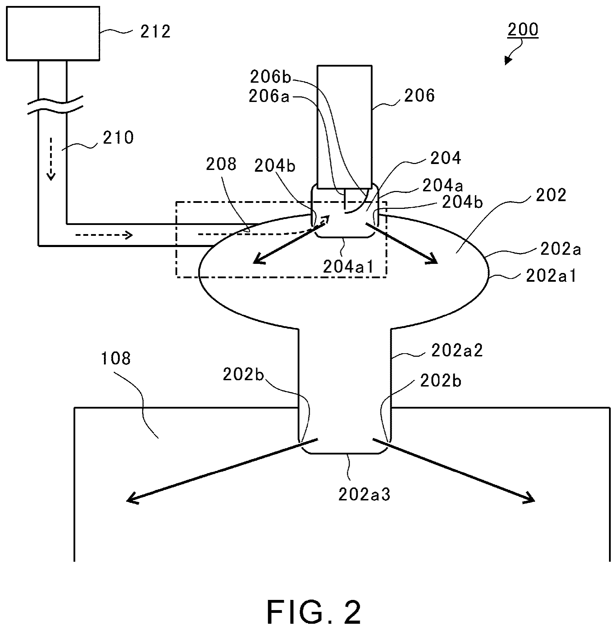

An ignition mechanism 200 is provided in the cylinder head 104. The ignition mechanism 200 is placed, for example, on a center axis of the piston 106. The ignition mechanism 200 includes a first sub-chamber 202, a second sub-chamber 204, and an ignition device 206. Details of the ignition mechanism 200 are described later with reference to FIG. 2 and the like.

The gas engine 100 is, for example, a four-stroke engine. In an intake stroke, the intake valve 110a opens, the exhaust valve 110b closes, and the piston 106 moves toward the bottom dead center. A mixture of a fuel gas and air flows into the combustion chamber 108 through the intake port 104a. In a compression stroke, the intake valve 110a and the exhaust valve 110b close, and the piston 106 moves toward the top dead center. The mixture compressed by the piston 106 is led from the combustion chamber 108 through the first sub-chamber 202 into the second sub-chamber 204. The mixture is ignited by the ignition device 206, and a flame is ejected through the second sub-chamber 204 and the first sub-chamber 202 into the combustion chamber 108. In the combustion chamber 108, the mixture is burned by the flame. In an expansion stroke, the piston 106 is pressed to the bottom dead center side. In an exhaust stroke, the intake valve 110a closes, the exhaust valve 110b opens, and the piston 106 moves toward the top dead center. An exhaust gas after the combustion is discharged from the combustion chamber 108 through the exhaust port 104b.

The fuel gas to be used in the gas engine 100 is not particularly limited. However, fuels having flame retardancy are used in the gas engine 100 in some cases. Examples of the fuels having flame retardancy include ammonia and a dilute natural gas. In a case in which a fuel having flame retardancy is used, when combustion in the combustion chamber 108 is not sufficiently promoted, there is a fear in that an in-cylinder pressure becomes low. In this embodiment, the promotion of combustion in the combustion chamber 108 is achieved by devising the ignition mechanism 200. Details of the ignition mechanism 200 are described below.

An axial direction, a circumferential direction, and a radial direction of the piston 106 are hereinafter also simply referred to as "axial direction," "circumferential direction," and "radial direction," respectively. The top dead center side of the piston 106 is hereinafter also referred to as "upper side," and the bottom dead center side of the piston 106 is hereinafter also referred to as "lower side."

FIG. 2 is a view for illustrating a schematic configuration of the ignition mechanism 200. However, the example illustrated in FIG. 2 is merely an example of the ignition mechanism 200. As described later, a shape, arrangement, and the like of each component of the ignition mechanism 200 are not limited to the example illustrated in FIG. 2.

As illustrated in FIG. 2, the ignition mechanism 200 includes the first sub-chamber 202, the second sub-chamber 204, the ignition device 206, an injection hole 208, a supply channel 210, and a supply source 212 for a gas.

The first sub-chamber 202 is a space that is in communication with the combustion chamber 108. The first sub-chamber 202 is defined by a first sub-chamber housing 202a. The first sub-chamber housing 202a includes an upper housing 202a1 and a lower housing 202a2.

The upper housing 202a1 has a flat shape obtained by flattening a spherical shape in an up-and-down direction. The upper housing 202a1 is placed coaxially with the center axis of the piston 106. A lower portion of the upper housing 202a1 is connected to an upper portion of the lower housing 202a2. The upper housing 202a1 is in communication with the lower housing 202a2.

The lower housing 202a2 has a cylindrical shape. The lower housing 202a2 is placed coaxially with the center axis of the piston 106. A lower portion of the lower housing 202a2 protrudes into the combustion chamber 108. A bottom surface 202a3 of the lower housing 202a2 is located within the combustion chamber 108. The bottom surface 202a3 and a side surface surrounding the bottom surface 202a3 of the lower housing 202a2 separate the combustion chamber 108 and the first sub-chamber 202 from each other.

The first sub-chamber 202 is in communication with the combustion chamber 108 via a first communication hole 202b. A plurality of first communication holes 202b are formed in the first sub-chamber housing 202a. The plurality of first communication holes 202b are formed in a lower portion of the first sub-chamber housing 202a. The plurality of first communication holes 202b are formed in a portion of the first sub-chamber housing 202a facing the combustion chamber 108.

The plurality of first communication holes 202b are formed at intervals in the circumferential direction. For example, the plurality of first communication holes 202b are formed at equal intervals in the circumferential direction. However, the number and arrangement of the first communication holes 202b are not limited. For example, the number of the first communication holes 202b may be singular. For example, the plurality of first communication holes 202b may be formed at unequal intervals in the circumferential direction. A shape of the first communication hole 202b is, for example, circular. However, the shape of the first communication hole 202b is not limited. For example, the shape of the first communication hole 202b may be oval or may be polygonal.

The second sub-chamber 204 is a space that is in communication with the first sub-chamber 202. A volume of the second sub-chamber 204 is smaller than a volume of the first sub-chamber 202. The second sub-chamber 204 is defined by a second sub-chamber housing 204a.

The second sub-chamber housing 204a has a cylindrical shape. The second sub-chamber housing 204a is placed coaxially with the center axis of the piston 106. A lower portion of the second sub-chamber housing 204a protrudes into the first sub-chamber 202. A bottom surface 204a1 of the second sub-chamber housing 204a is located within the first sub-chamber 202. The bottom surface 204a1 and a side surface surrounding the bottom surface 204a1 of the second sub-chamber housing 204a separate the first sub-chamber 202 and the second sub-chamber 204 from each other.

The second sub-chamber 204 is in communication with the first sub-chamber 202 via a second communication hole 204b. A plurality of second communication holes 204b are formed in the second sub-chamber housing 204a. The plurality of second communication holes 204b are formed in the lower portion of the second sub-chamber housing 204a. The plurality of second communication holes 204b are formed in a portion of the second sub-chamber housing 204a facing the first sub-chamber 202.

The plurality of second communication holes 204b are formed at intervals in the circumferential direction. For example, the plurality of second communication holes 204b are formed at equal intervals in the circumferential direction. However, the number and arrangement of the second communication holes 204b are not limited. For example, the number of the second communication holes 204b may be singular. For example, the plurality of second communication holes 204b may be formed at unequal intervals in the circumferential direction. A shape of the second communication hole 204b is, for example, circular. However, the shape of the second communication hole 204b is not limited. For example, the shape of the second communication hole 204b may be oval or may be polygonal.

The ignition device 206 is provided in order to ignite the mixture of the fuel gas and the air. The ignition device 206 is provided in the second sub-chamber 204. The ignition device 206 includes a center electrode 206a and a ground electrode 206b. In the example illustrated in FIG. 2, an ignition method with the ignition device 206 is a spark-based method. However, the ignition method with the ignition device 206 is not limited, and may be pilot ignition, laser ignition, or the like.

The center electrode 206a has, for example, a rod shape. The center electrode 206a extends linearly and downward from an upper portion of the second sub-chamber 204. A distal end portion of the center electrode 206a is located near a center of the second sub-chamber 204. The center electrode 206a is placed coaxially with the center axis of the piston 106. The ground electrode 206b has, for example, an arc shape. The ground electrode 206b curves and extends downward from the upper portion of the second sub-chamber 204.

A gap is defined between a distal end portion of the ground electrode 206b and the distal end portion of the center electrode 206a. This gap is also referred to as "spark gap." The potential of the ground electrode 206b is maintained at ground potential. Through application of a voltage to the center electrode 206a, the ignition device 206 can generate a spark discharge in the spark gap due to a potential difference between the center electrode 206a and the ground electrode 206b.

The ignition device 206 and the second sub-chamber housing 204a may be connected directly to each other, and may be detachably mounted as a single unit. In this case, the ignition device 206 and the second sub-chamber housing 204a may be connected to each other by, for example, screw fastening. Further, the ignition device 206 and the second sub-chamber housing 204a may be free of being directly connected to each other, and may be detachably mounted individually.

In the compression stroke, the mixture of the fuel gas and the air is led from the combustion chamber 108 through the first communication holes 202b into the first sub-chamber 202. The mixture led into the first sub-chamber 202 is led from the first sub-chamber 202 through the second communication holes 204b into the second sub-chamber 204. The mixture in the second sub-chamber 204 is then ignited by the ignition device 206. Thus, as indicated by the solid arrows in FIG. 2, a flame is ejected from the second sub-chamber 204 through each of the second communication holes 204b into the first sub-chamber 202. The flame ejected into the first sub-chamber 202 ignites the mixture in the first sub-chamber 202. Thus, as indicated by the solid arrows in FIG. 2, the flame is ejected from the first sub-chamber 202 through each of the first communication holes 202b into the combustion chamber 108. The flame ejected into the combustion chamber 108 ignites the mixture in the combustion chamber 108.

As described above, the ignition mechanism 200 includes, in addition to the first sub-chamber 202, the second sub-chamber 204 having a volume smaller than the volume of the first sub-chamber 202. The mixture in the second sub-chamber 204 is ignited by the ignition device 206. Accordingly, as compared to a case in which the mixture in the first sub-chamber 202 is directly ignited, the combustion of the mixture in the second sub-chamber 204 can be completed earlier, and hence the timing of flame generation can be accelerated. Thus, the speed of combustion in the first sub-chamber 202 can be increased, and in turn, the combustion in the combustion chamber 108 can be promoted.

The injection hole 208 is a hole through which the gas is allowed to be injected into the second sub-chamber 204. The injection hole 208 is formed in the first sub-chamber 202. In the example illustrated in FIG. 2, the injection hole 208 is opened in the upper housing 202a1 of the first sub-chamber housing 202a. However, the injection hole 208 may be opened in a portion of the first sub-chamber housing 202a other than the upper housing 202a1 (for example, the lower housing 202a2). A shape of the injection hole 208 is, for example, circular. However, the shape of the injection hole 208 is not limited. For example, the shape of the injection hole 208 may be oval or may be polygonal.

The injection hole 208 is connected to the supply source 212 for a gas through intermediation of the supply channel 210. As indicated by the dashed arrows in FIG. 2, the gas supplied from the supply source 212 is fed to the injection hole 208 through the supply channel 210. The gas fed to the injection hole 208 is injected from the injection hole 208 into the first sub-chamber 202, and is led through the second communication holes 204b into the second sub-chamber 204. The injection of the gas from the injection hole 208 into the second sub-chamber 204 is performed, for example, at a timing prior to the ignition performed by the ignition device 206. The condition of the second sub-chamber 204 can be adjusted by supplying the gas from the injection hole 208 into the second sub-chamber 204, thereby being capable of stabilizing the ignition of the mixture in the second sub-chamber 204 and increasing the speed of ignition.

Examples of the gas to be injected from the injection hole 208 include a fuel gas, air, and a mixture of a fuel gas and air. The gas to be injected from the injection hole 208 may be switchable between a plurality of kinds of gases. For example, a fuel gas, air, and a mixture of a fuel gas and air may be injected from the injection hole 208 in a switchable manner.

For example, the fuel gas is injected from the injection hole 208 to supply the fuel gas into the second sub-chamber 204, thereby being capable of performing adjustment to increase a fuel concentration in the second sub-chamber 204. Thus, the ignition of the mixture in the second sub-chamber 204 is stabilized, and the speed of ignition is increased. The volume of the second sub-chamber 204 is smaller than the volume of the first sub-chamber 202, and hence the time required for adjusting the fuel concentration can be shortened, and an amount of the fuel gas to be supplied for adjusting the fuel concentration can be reduced.

For example, high-temperature air is injected from the injection hole 208 to supply the high-temperature air into the second sub-chamber 204, thereby being capable of performing adjustment to increase a temperature in the second sub-chamber 204. Thus, the ignition of the mixture in the second sub-chamber 204 is stabilized, and the speed of ignition is increased. The volume of the second sub-chamber 204 is smaller than the volume of the first sub-chamber 202, and hence the time required for adjusting the temperature can be shortened, and an amount of the air to be supplied for adjusting the temperature can be reduced.

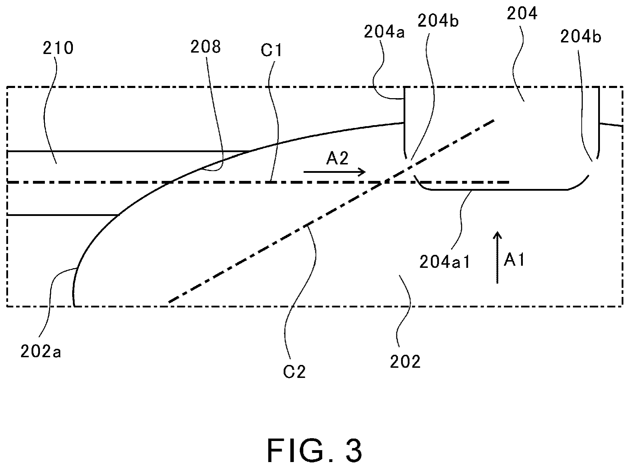

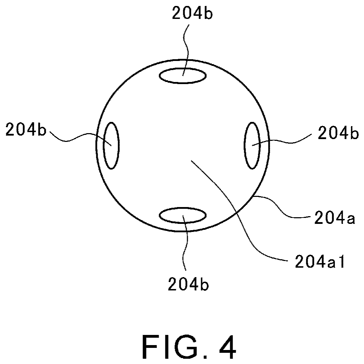

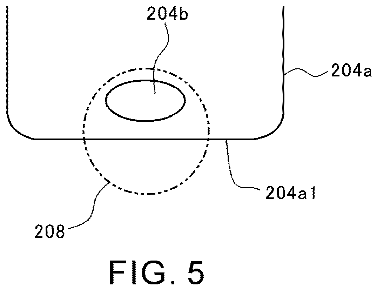

FIG. 3 is an extracted view for illustrating a part indicated by the dot-and-dash line of FIG. 2. FIG. 4 is a view of the second sub-chamber housing 204a as seen from below. FIG. 4 is a view of the second sub-chamber housing 204a as seen in a direction indicated by the arrow A1 of FIG. 3. FIG. 5 is a view of the second sub-chamber housing 204a as seen from the lateral side. FIG. 5 is a view of the second sub-chamber housing 204a as seen in a direction indicated by the arrow A2 of FIG. 3.

In the example illustrated in FIG. 3 to FIG. 5, the shape of the injection hole 208 and the shape of the second communication hole 204b are circular. In FIG. 3, a center axis C1 of the injection hole 208 and a center axis C2 of the second communication hole 204b are illustrated. The center axis C1 of the injection hole 208 is an axis along a direction of injecting the gas from the injection hole 208. The center axis C2 of the second communication hole 204b is an axis along a direction of injecting the flame from the second communication hole 204b.

The center axis C1 of the injection hole 208 extends in the radial direction of the second sub-chamber housing 204a. The center axis C2 of the second communication hole 204b extends in the radial direction of the second sub-chamber housing 204a when seen from below. However, the center axis C2 of the second communication hole 204b extends obliquely downward as extending toward a radially outer side of the second sub-chamber housing 204a. Accordingly, the direction of the center axis C1 of the injection hole 208 intersects the direction of the center axis C2 of the second communication hole 204b. However, when seen from below, the direction of the center axis C1 of the injection hole 208 is parallel to the direction of the center axis C2 of the second communication hole 204b.

As illustrated in FIG. 4, four second communication holes 204b are formed in the second sub-chamber housing 204a at equal intervals in the circumferential direction. As illustrated in FIG. 5, when seen in the direction of the center axis C1 of the injection hole 208, one second communication hole 204b is present inside a projected region of the injection hole 208. Thus, the injection hole 208 faces one of the four second communication holes 204b. Accordingly, the gas injected from the injection hole 208 is smoothly led into the second sub-chamber 204 through the second communication hole 204b that the injection hole 208 faces.

In the example illustrated in FIG. 5, when seen in the direction of the center axis C1 of the injection hole 208, an entire region of one second communication hole 204b is present inside the projected region of the injection hole 208. However, when seen in the direction of the center axis C1 of the injection hole 208, only a part of the second communication hole 204b may be present inside the projected region of the injection hole 208. Also in this case, the injection hole 208 faces the second communication hole 204b. Further, when seen in the direction of the center axis C1, the plurality of second communication holes 204b may be present inside the projected region of the injection hole 208. In this case, the injection hole 208 faces the plurality of second communication holes 204b.

As described above, the ignition mechanism 200 in this embodiment includes: the combustion chamber 108; the first sub-chamber 202 that is in communication with the combustion chamber 108 via the first communication holes 202b; the second sub-chamber 204 that is in communication with the first sub-chamber 202 via the second communication holes 204b, and has the volume smaller than the volume of the first sub-chamber 202; and the ignition device 206 provided in the second sub-chamber 204. With this configuration, as compared to the case in which the mixture in the first sub-chamber 202 is directly ignited, the combustion of the mixture in the second sub-chamber 204 can be completed earlier, and hence the timing of flame generation can be accelerated. Thus, the speed of combustion in the first sub-chamber 202 can be increased, and in turn, the combustion in the combustion chamber 108 can be prompted. In addition, the ignition mechanism 200 in this embodiment includes the injection hole 208 through which the gas is allowed to be injected into the second sub-chamber 204. With this configuration, the condition of the second sub-chamber 204 can be adjusted by supplying the gas from the injection hole 208 into the second sub-chamber 204, thereby being capable of stabilizing the ignition of the mixture in the second sub-chamber 204 and increasing the speed of ignition. As described above, the ignition mechanism 200 in this embodiment can promote the combustion in the combustion chamber 108.

In particular, in the ignition mechanism 200, the injection hole 208 is formed in the first sub-chamber 202, and faces the second communication hole 204b. With this configuration, it is achieved that the gas injected from the injection hole 208 is smoothly led into the second sub-chamber 204 through the second communication hole 204b that the injection hole 208 faces. Accordingly, with the injection hole 208, it is properly achieved to inject the gas into the second sub-chamber 204. However, as described later, the injection hole 208 may be formed in the second sub-chamber 204. However, the volume of the first sub-chamber 202 is larger than the volume of the second sub-chamber 204, and hence when the injection hole 208 is formed in the first sub-chamber 202, a degree of freedom in installation of the injection hole 208 and the supply channel 210 is higher as compared to the case in which the injection hole 208 is formed in the second sub-chamber 204.

In particular, as illustrated in FIG. 3, in the ignition mechanism 200, the direction of the center axis C1 of the injection hole 208 intersects the direction of the center axis C2 of the second communication hole 204b. When the direction of the center axis C1 is parallel to the direction of the center axis C2 of the second communication hole 204b, the flame ejected from the second sub-chamber 204 through the second communication hole 204b into the first sub-chamber 202 advances toward the injection hole 208, and hence is less likely to contribute to ignition of the mixture in the first sub-chamber 202. Accordingly, with the direction of the center axis C1 of the injection hole 208 intersecting the direction of the center axis C2 of the second communication hole 204b, the ignition of the mixture in the first sub-chamber 202 can be promoted by the flame ejected from the second sub-chamber 204 through the second communication hole 204b into the first sub-chamber 202. However, the direction of the center axis C1 may be parallel to the direction of the center axis C2 of the second communication hole 204b.

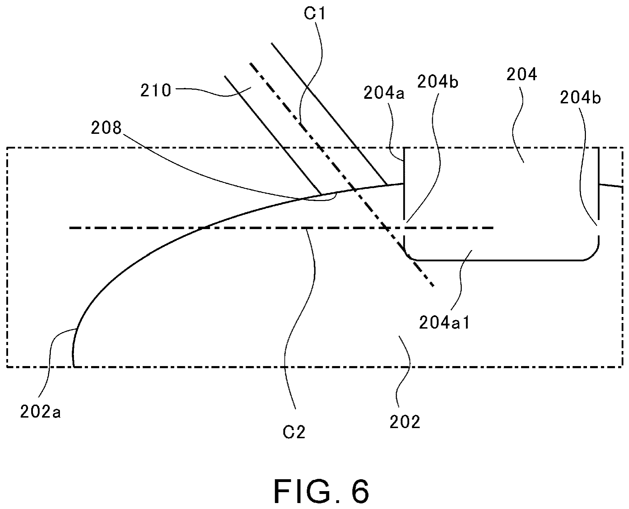

FIG. 6 to FIG. 8 are views each for illustrating an example that is different from the example illustrated in FIG. 3 to FIG. 5 in the positional relationship between the injection hole 208 and the second communication hole 204b. Also in each of the examples illustrated in FIG. 6 to FIG. 8, the direction of the center axis C1 of the injection hole 208 intersects the direction of the center axis C2 of the second communication hole 204b. Accordingly, also in each of the examples illustrated in FIG. 6 to FIG. 8, the ignition of the mixture in the first sub-chamber 202 can be promoted by the flame ejected from the second sub-chamber 204 through the second communication hole 204b into the first sub-chamber 202.

FIG. 6 is a view for illustrating a part corresponding to FIG. 3. In the example illustrated in FIG. 6, the center axis C2 of the second communication hole 204b extends in the radial direction of the second sub-chamber housing 204a. The center axis C1 of the injection hole 208 extends obliquely downward as extending toward a radially inner side of the second sub-chamber housing 204a.

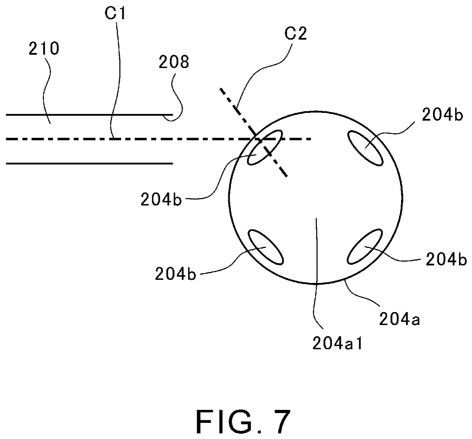

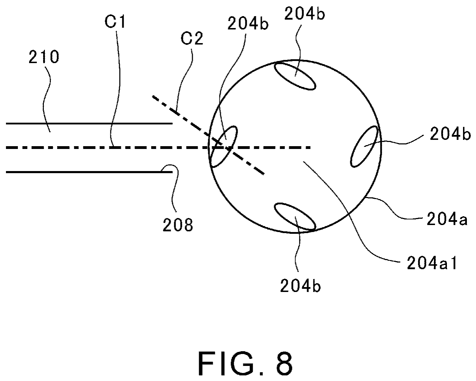

FIG. 7 and FIG. 8 are views of the injection hole 208 and the second sub-chamber housing 204a as seen from below. In the example illustrated in FIG. 3 to FIG. 5, when seen from below, the direction of the center axis C1 of the injection hole 208 is parallel to the direction of the center axis C2 of the second communication hole 204b. Meanwhile, in each of the examples illustrated in FIG. 7 and FIG. 8, when seen from below, the direction of the center axis C1 of the injection hole 208 intersects the direction of the center axis C2 of the second communication hole 204b.

In the example illustrated in FIG. 7, when seen from below, the center axis C1 of the injection hole 208 extends in a direction oblique to the radial direction of the second sub-chamber housing 204a, and the center axis C2 of the second communication hole 204b extends in the radial direction of the second sub-chamber housing 204a. In the example illustrated in FIG. 8, when seen from below, the center axis C1 of the injection hole 208 extends in the radial direction of the second sub-chamber housing 204a, and the center axis C2 of the second communication hole 204b extends in the direction oblique to the radial direction of the second sub-chamber housing 204a.

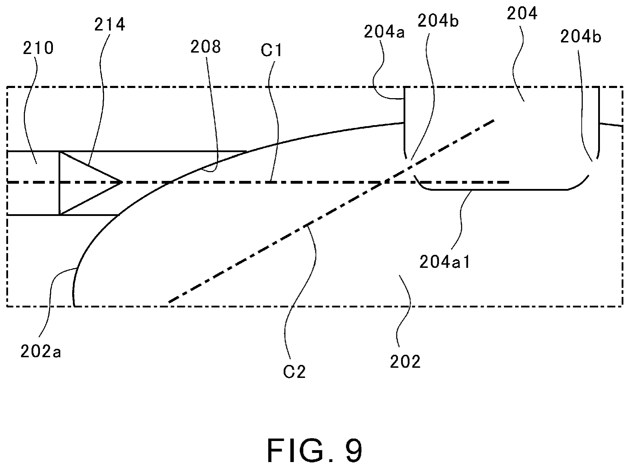

FIG. 9 is a view for illustrating an example in which a check valve 214 is added to the example illustrated in FIG. 3 to FIG. 5. In the example illustrated in FIG. 9, the check valve 214 is provided in the supply channel 210. The check valve 214 restricts a flow of the gas to a direction from the supply source 212 toward the injection hole 208. That is, in the supply channel 210, the check valve 214 allows the flow of the gas in the direction from the supply source 212 toward the injection hole 208, while the check valve 214 prohibits the flow of the gas in a direction from the injection hole 208 toward the supply source 212. When the gas supplied from the supply source 212 contains the fuel, with the provision of the check valve 214 in the supply channel 210, the flame can be inhibited from advancing from the first sub-chamber 202 through the injection hole 208 into the supply channel 210 under a condition in which the combustion in the first sub-chamber 202 is being performed.

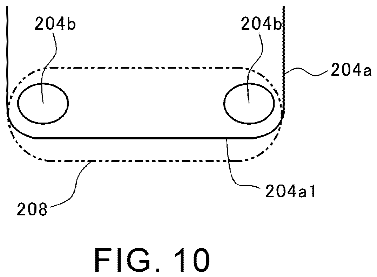

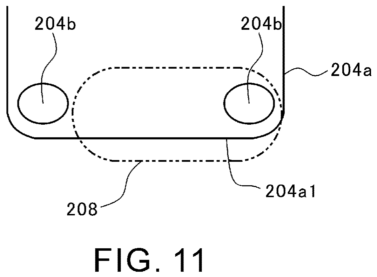

FIG. 10 and FIG. 11 are views each for illustrating an example that is different from the example illustrated in FIG. 3 to FIG. 5 in the shape of the injection hole 208. In the examples illustrated in FIG. 10 and FIG. 11, the shape of the injection hole 208 is an elongated hole shape extending in a direction orthogonal to the up-and-down direction. For example, when the ignition device 206 and the second sub-chamber housing 204a are connected to each other by screw fastening, it may be difficult to position the second sub-chamber housing 204a in a direction of rotation, resulting in that a circumferential position of the second communication hole 204b may be easily shifted from a target position. In the examples illustrated in FIG. 10 and FIG. 11, with the injection hole 208 being formed into an elongated hole shape, the certainty of causing the injection hole 208 to face the second communication hole 204b can be increased.

In the example illustrated in FIG. 10, a length of the injection hole 208 in an extending direction (length in a right-and-left direction in FIG. 10) is substantially equal to a diameter of the second sub-chamber housing 204a. Accordingly, the injection hole 208 can be caused to face at least two second communication holes 204b regardless of the orientation of the second sub-chamber housing 204a in the direction of rotation. In the example illustrated in FIG. 11, the length of the injection hole 208 in the extending direction (length in the right-and-left direction in FIG. 11) is substantially equal to a length obtained by reducing the diameter of the second communication hole 204b from the diameter of the second sub-chamber housing 204a. Accordingly, the injection hole 208 can be caused to face at least one second communication hole 204b regardless of the orientation of the second sub-chamber housing 204a in the direction of rotation.

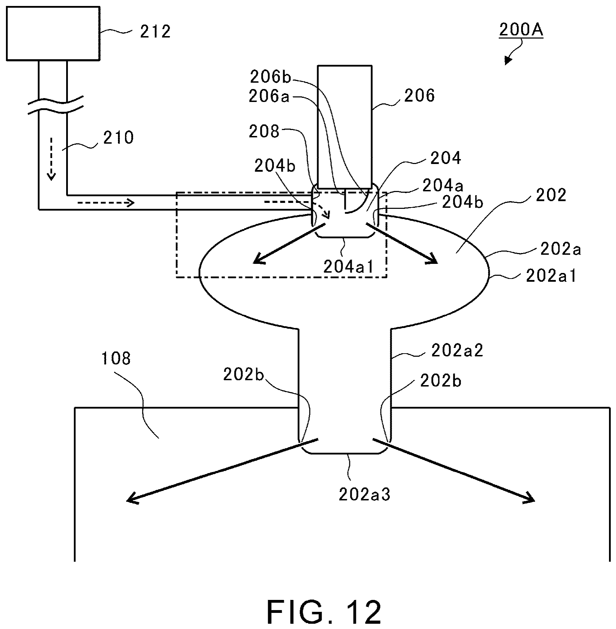

FIG. 12 is a view for illustrating a schematic configuration of an ignition mechanism 200A in a modification example. In the ignition mechanism 200A in the modification example, an installation position of the injection hole 208 is different from that in the ignition mechanism 200 described above.

As illustrated in FIG. 12, the injection hole 208 is formed in the second sub-chamber 204. In the example illustrated in FIG. 12, the injection hole 208 is opened in a side surface of the second sub-chamber housing 204a of the second sub-chamber 204. However, the injection hole 208 may be opened in a portion of the second sub-chamber housing 204a other than the side surface. The injection hole 208 faces an interior of the second sub-chamber 204.

As indicated by the dashed arrows in FIG. 12, the gas supplied from the supply source 212 is fed through the supply channel 210 to the injection hole 208. The gas fed to the injection hole 208 is then injected directly from the injection hole 208 into the second sub-chamber 204. Similarly to the ignition mechanism 200 described above, the injection of the gas from the injection hole 208 into the second sub-chamber 204 is performed, for example, at a timing prior to the ignition performed by the ignition device 206. Similarly to the ignition mechanism 200 described above, examples of the gas to be injected from the injection hole 208 include a fuel gas, air, and a mixture of a fuel gas and air. The condition of the second sub-chamber 204 can be adjusted by supplying the gas from the injection hole 208 into the second sub-chamber 204, thereby being capable of stabilizing the ignition of the mixture in the second sub-chamber 204 and increasing the speed of ignition.

As described above, similarly to the ignition mechanism 200 described above, the ignition mechanism 200A in the modification example includes: the combustion chamber 108; the first sub-chamber 202 that is in communication with the combustion chamber 108 via the first communication holes 202b; the second sub-chamber 204 that is in communication with the first sub-chamber 202 via the second communication holes 204b, and has the volume smaller than the volume of the first sub-chamber 202; the ignition device 206 provided in the second sub-chamber 204; and the injection hole 208 through which the gas is allowed to be injected into the second sub-chamber 204. With this configuration, similarly to the ignition mechanism 200 described above, the combustion in the combustion chamber 108 can be promoted.

In particular, in the ignition mechanism 200A, the injection hole 208 is formed in the second sub-chamber 204. With this configuration, the gas can be injected directly from the injection hole 208 into the second sub-chamber 204. Accordingly, as compared to the case in which the injection hole 208 is formed in the first sub-chamber 202, the certainty of supplying the gas into the second sub-chamber 204 can be increased.

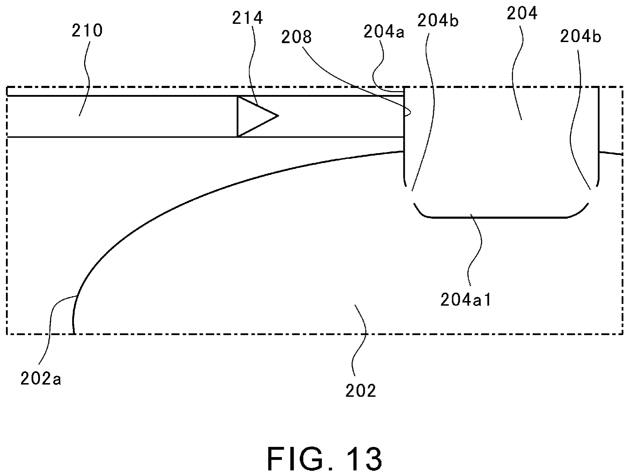

FIG. 13 is an extracted view for illustrating a part indicated by the dot-and-dash line of FIG. 12. As illustrated in FIG. 13, similarly to the example illustrated in FIG. 9, the check valve 214 is provided in the supply channel 210. Similarly to the example illustrated in FIG. 9, the check valve 214 restricts a flow of the gas to a direction from the supply source 212 toward the injection hole 208. When the gas supplied from the supply source 212 contains the fuel, with the provision of the check valve 214 in the supply channel 210, the flame can be inhibited from advancing from the second sub-chamber 204 through the injection hole 208 into the supply channel 210 under a condition in which the combustion in the second sub-chamber 204 is being performed. However, the check valve 214 may be omitted from the example illustrated in FIG. 13.

Embodiments of the present disclosure have been described above with reference to the attached drawings, but, needless to say, the present disclosure is not limited to the above-mentioned embodiments. It is apparent that those skilled in the art may arrive at various alternations and modifications within the scope of the claims, and those examples are construed as naturally falling within the technical scope of the present disclosure.

One or a plurality of additional sub-chambers may be further interposed between the first sub-chamber 202 and the second sub-chamber 204. For example, a third sub-chamber may be interposed between the first sub-chamber 202 and the second sub-chamber 204. In this case, the first sub-chamber 202 and the third sub-chamber are in communication with each other via a communication hole, and the third sub-chamber and the second sub-chamber 204 are in communication with each other via another communication hole different from the above-mentioned communication hole. With this configuration, the first sub-chamber 202 and the second sub-chamber 204 are in communication with each other via the third sub-chamber.

The shape of the first sub-chamber housing 202a and the shape of the second sub-chamber housing 204a are not limited to the example illustrated in FIG. 2 or the example illustrated in FIG. 12. For example, the upper housing 202a1 may be omitted from the example illustrated in FIG. 2 or the example illustrated in FIG. 12, and the entire first sub-chamber housing 202a may have a cylindrical shape. For example, the shape of the second sub-chamber housing 204a may be a shape other than a cylindrical shape.

The positional relationship between the components is not limited to the example illustrated in FIG. 2 or the example illustrated in FIG. 12. For example, the first sub-chamber housing 202a, the second sub-chamber housing 204a, and the ignition device 206 may be free of being placed coaxially with the center axis of the piston 106. For example, the first sub-chamber housing 202a and the second sub-chamber housing 204a may be free of being placed coaxially with each other. For example, the second sub-chamber housing 204a and the ignition device 206 may be free of being placed coaxially with each other.

The present disclosure is conducive to the promotion of combustion in the combustion chamber, and hence can contribute to, for example, Goal 7 "Ensure access to affordable, reliable, sustainable and modern energy for all" and Goal 13 "Take urgent action to combat climate change and its impacts" of Sustainable Development Goals (SDGs).

### Reference Signs List

100: gas engine, 108: combustion chamber, 202: first sub-chamber, 202b: first communication hole, 204: second sub-chamber, 204b: second communication hole, 206: ignition device, 208: injection hole, 210: supply channel, 212: supply source, 214: check valve, C1: center axis, C2: center axis

## Claims

1. A gas engine, comprising:
a combustion chamber;
a first sub-chamber that is in communication with the combustion chamber via a first communication hole;
a second sub-chamber that is in communication with the first sub-chamber via a second communication hole, and has a volume smaller than a volume of the first sub-chamber;
an ignition device provided in the second sub-chamber; and
an injection hole through which a gas is allowed to be injected into the second sub-chamber.

2. The gas engine according to claim 1, wherein the injection hole is formed in the first sub-chamber, and faces the second communication hole.

3. The gas engine according to claim 2, wherein a direction of a center axis of the injection hole intersects a direction of a center axis of the second communication hole.

4. The gas engine according to claim 1, wherein the injection hole is formed in the second sub-chamber.

5. The gas engine according to any one of claims 1 to 4,
wherein the injection hole is connected to a supply source for the gas through intermediation of a supply channel, and
wherein a check valve is provided in the supply channel so as to restrict a flow of the gas to a direction from the supply source toward the injection hole.
